# EUROPÄISCHE PATENTSCHRIFT

(11) **EP 2 380 223 B1**
(45) Veröffentlichungstag und Bekanntmachung des Hinweises auf die Patenterteilung: **10.07.2019**
(21) Anmeldenummer: 09756310.0
(22) Anmeldetag: 23.11.2009
(51) Int. Cl.: H01M 10/052, H01M 2/10, H01M 10/34, H01M 10/48, H01M 10/6554, H01M 10/6555, H01M 10/6556, H01M 10/613, H01M 10/615, H01M 10/653, H01M 10/647, H01M 10/643, H01M 10/04, H01M 10/625, H01M 2/02, B60L 3/00, B60L 50/64, B60L 58/27, B60L 58/26

(54) **WIEDERAUFLADBARE BATTERIE MIT EINER WÄRMETRANSPORTEINRICHTUNG ZUM HEIZEN UND/ODER KÜHLEN DER BATTERIE**
RECHARGEABLE BATTERY HAVING A HEAT TRANSPORT DEVICE FOR HEATING AND/OR COOLING THE BATTERY
BATTERIE RECHARGEABLE AVEC DISPOSITIF DE TRANSPORT DE CHALEUR POUR LE CHAUFFAGE ET/OU LE REFROIDISSEMENT DE LA BATTERIE

(30) Priorität: 19.12.2008 DE 102008054947
(43) Veröffentlichungstag der Anmeldung: 26.10.2011
(73) Patentinhaber: Robert Bosch GmbH, 70442 Stuttgart (DE)
(72) Erfinder: FINK, Holger, 70567 Stuttgart (DE)
(86) Internationale Anmeldenummer: PCT/EP2009/065614
(87) Internationale Veröffentlichungsnummer: WO 2010/069713

(56) Entgegenhaltungen:
- EP-A2- 1 309 019
- EP-A2- 2 065 963
- WO-A2-03/071616
- DE-A1-102007 010 744
- JP-A- 7 006 796
- US-A- 5 756 227

## Beschreibung

Die Erfindung betrifft eine wiederaufladbare Batterie mit mindestens einem Batterieelement, einer Wärmetransporteinrichtung zum Heizen und/oder Kühlen der Batterie und mindestens einer Wärmeleiteinrichtung zum innerhalb der Batterie erfolgenden Wärmetransfer mittels Wärmeleitung zwischen dem Batterieelement und der Wärmetransporteinrichtung.

### Stand der Technik

Eine derartige wiederaufladbare Batterie ist bekannt. Unter dem Begriff wiederaufladbare Batterie ist im Zusammenhang dieser Patentanmeldung - dem allgemeinen Sprachgebrauch angepasst - ein Akkumulator zu verstehen, der über viele Zyklen elektrisch geladen und wieder entladen werden kann. Die Batterie besteht dabei aus einzelnen galvanischen Zellen, den Batteriezellen, die eine für die verwendete Materialkombination der Zelle charakteristische Spannung liefern. Um aus diesen Batteriezellen eine Batterie aufzubauen, die die geforderten Leistungs- und Energiemengen liefern kann, werden die einzelnen Batteriezellen elektrisch in Serie und/oder parallel geschaltet. Ein Batterieelement der Batterie ist eine einzelne Batteriezelle oder eine kompakte Batterieanordnung miteinander elektrisch verschalteter Batteriezellen.

Die Wärmeleiteinrichtung oder die Wärmeleiteinrichtungen ermöglichen einen batterieinternen Wärmetransfer zwischen dem Batterieelement oder den Batterieelementen und der Wärmetransporteinrichtung. Die Wärmetransporteinrichtung ist eine der Batterie als ganzem zugeordnete Einrichtung zur Zufuhr von Wärme zu der Batterie und/oder zur Abfuhr der Wärme von der Batterie.

Die EP 1 278 263 B1 beschreibt eine wiederaufladbare Batterie mit mehreren Batterieelementen und einem Wärmeübertragungsteil, das aus einer Vielzahl erster Wärmeübertragungsplatten und einer zweiten Wärmeübertragungsplatte besteht, wobei die ersten Wärmeübertragungsplatten zum innerhalb der Batterie erfolgenden Wärmetransfer mittels Wärmeleitung zwischen den Batterieelementen und der zweiten Wärmeübertragungsplatte dient und die zweiten Wärmeübertragungsplatte zum Heizen und/oder Kühlen der Batterie mit einer Wärmeübertragungsfläche eines Wärmetauschers oder mit einem Kühlmittel in Kontakt steht.

Die Nutzung von Wärmeleitung zum Wärmetransfer innerhalb der Batterie erfordert eine gute thermische Anbindung der Wärmeleiteinrichtung an die Batterieelemente.

Die Druckschriften DE 10 2007 010744 A1 und EP 1 309 019 A2 zeigen wiederaufladbare Batterien.

### Offenbarung der Erfindung

Die Batterie weist eine Spannvorrichtung und/oder eine von dem Batterieelement und der Wärmeleiteinrichtung gebildete Spannanordnung auf, die das Batterieelement und die Wärmeleiteinrichtung gegeneinander verspannt. Während die Spannvorrichtung eine zusätzlich zu dem Batterieelement und der Wärmeleiteinrichtung vorgesehene Vorrichtung ist, wird durch die von dem Batterieelement und der Wärmeleiteinrichtung gebildete Spannanordnung selbst eine der Spannvorrichtung entsprechende Vorrichtung gebildet. Durch den beim Verspannen entstehenden Druck im Kontaktbereich zwischen dem Batterieelement und der Wärmeleiteinrichtung ist der thermische Übergangswiderstand zwischen Wärmeleiteinrichtung und Batterieelement gering. Der von der Spannvorrichtung und/oder der Spannanordnung erzeugte Spanndruck ist dabei bevorzugt so auf die Wärmeausdehnung des Batterieelements und der Wärmeleiteinrichtung abgestimmt, dass er im gesamten Temperatur-Arbeitsbereich der Batterie aufrechterhalten bleibt.

Die Wärmeleiteinrichtung besteht - zumindest teilweise - aus einem Material mit hoher thermischer Leitfähigkeit, vorzugsweise aus einem Metall mit geringem elektrischem Widerstand. Dieses Metall ist insbesondere Kupfer oder Aluminium.

Die Wärmeleiteinrichtung oder die Wärmeleiteinrichtungen ermöglichen einen Batterie-internen Wärmetransfer zwischen dem Batterieelement oder den Batterieelementen und der Wärmetransporteinrichtung. Die Wärmetransporteinrichtung ist eine der Batterie als ganze zugeordnete Einrichtung zur Zufuhr von Wärme zu der Batterie und/oder zur Abfuhr der Wärme von der Batterie.

Die wiederaufladbare Batterie (der Akkumulator) ist ein über viele Zyklen elektrisch ladbarer und wieder entladbarer elektrischer Energiespeicher, der einzelne galvanische Zellen, die Batteriezellen, aufweist, die eine für die verwendete Materialkombination der jeweiligen Zelle charakteristische Spannung liefern. Um eine geforderte Leistungs- und Energiekapazität der Batterie zu erreichen, werden die einzelnen Batteriezellen elektrisch in Serie und/oder parallel geschaltet. Ein Batterieelement der Batterie ist eine einzelne Batteriezelle oder eine kompakte Batterieanordnung miteinander elektrisch verschalteter Batteriezellen. Das Batterieelement ist bevorzugt eine einzelne Batteriezelle der Batterie. Die einzelne Batteriezelle ist die kleinste Elemente-Einheit der Batterie.

Die Wärmetransporteinrichtung bildet bevorzugt einen die Batterieelemente tragenden Batteriesockel. Durch die zusätzliche Funktion der Wärmetransporteinrichtung als Sockel wird eine kompakte und gewichtsreduzierte Bauweise der Batterie erreicht.

Erfindungsgemäß ist vorgesehen, dass das Batterieelement als kreiszylindrisches Batterieelement ausgebildet ist. Das kreiszylindrische Batterieelement - kurz das zylindrische Batterieelement - ist bevorzugt eine einzelne kreiszylindrische Batteriezelle der Batterie. Die kreiszylindrische Batteriezelle ist eine weit verbreitete Bauform der Batteriezelle.

Nicht erfindungsgemäß kann mit Vorteil vorgesehen sein, dass das Batterieelement als prismatisches Batterieelement ausgebildet ist. Das prismatische Batterieelement ist mit Vorteil ein im Wesentlichen quaderförmiges prismatisches Batterieelement, das ein Seitenpaar gegenüberliegender Seiten aufweist, deren Flächen deutlich größer sind als die Flächen der übrigen Seiten.

Die Wärmeleiteinrichtung ist als eine eine Mantelfläche des Batterieelements - zumindest abschnittsweise - vollumfänglich umgebende Wärmeleithülse ausgebildet. Bildet das Batterieelement, insbesondere die Batteriezelle, mit dieser Hülse die Spannanordnung, so ist die Hülse eine Spannhülse zur Verwirklichung einer als Pressverband ausgebildeten Verbindung zwischen Batterieelement und Wärmeleithülse. Das Material der Wärmeleiteinrichtung ist bevorzugt ein eigenelastisches Material.
Insbesondere ist vorgesehen, dass die als Wärmeleitplatte und/oder Wärmeleithülse ausgebildete Wärmeleiteinrichtung Durchbrüche zur Materialeinsparung aufweist.
Gemäß einer nicht erfindungsgemäßen Ausführungsform ist vorgesehen, dass mehrere prismatische Batterieelemente parallel zueinander ausgerichtet sind und einen Batterieelemente-Stapel bilden, wobei zwischen jeweils zwei benachbarten Batterieelementen mindestens eine Wärmeleiteinrichtung angeordnet ist. Das Verspannen ist insbesondere ein Verspannen durch ein beidseitiges Druckausüben in Stapelrichtung.
Die Spannvorrichtung weist nicht erfindungsgemäß einen Spannrahmen und/oder ein Spannband und/oder mindestens eine Spannfeder und/oder ein das Batterieelement und die Wärmeleiteinrichtung gegeneinander verspannendes Batteriegehäuse auf. Bilden Batterieelemente und Wärmeleiteinrichtungen einen Batterieelemente-Stapel, so verspannt der Spannrahmen, das Spannband und/oder das Batteriegehäuse den Stapel durch beidseitiges Druckausüben in Stapelrichtung.
Mit Vorteil ist vorgesehen, dass - zumindest in einem Bereich - zwischen mindestens einem Batterieelement und mindestens einer mit diesem Batterieelement verspannten Wärmeleiteinrichtung und/oder zwischen zwei Wärmeleiteinrichtungen mindestens ein elektrisch isolierendes Wärmeleitelement angeordnet ist. Das Wärmeleitelement (auch Wärmeleitpad genannt) ist elektrisch isolierend, bevorzugt zusätzlich auch thermisch leitfähig. Es ist insbesondere eine Silikongummi-Folie, bevorzugt mit einer Glasfasergewebe-Einlage, eine Glimmerscheibe, eine Keramikscheibe, vorzugsweise aus einer Aluminiumoxidkeramik, eine Silikonmatte und/oder eine Kunststofffolie, insbesondere eine Kaptonfolie. Die Kunststofffolie weist bevorzugt eine Paraffin-Beschichtung zur Füllung von mit Luft gefüllten Hohlräumen durch Aufschmelzen im Betrieb und/oder mit einer selbstklebenden Beschichtung auf.

Die Wärmetransporteinrichtung weist insbesondere einen Temperier-Körper, bevorzugt einen Temperier-Körper mit Temperier-Rippen, auf. Der Temperier-Körper ist ein zum Heizen und/oder Kühlen verwendbarer Körper, der allgemein auch einfach Kühlkörper (mit Kühlrippen) genannt wird. Die Temperier-Rippen vergrößern die zum Wärmeübergang zwischen dem Körper und einem Wärmetransportmedium benötigte Oberfläche. Bevorzugt weist die Wärmetransporteinrichtung weiterhin eine Pumpeinrichtung zur Zufuhr und/oder Abfuhr des Wärmetransportmediums auf. Das Wärmetransportmedium ist insbesondere ein flüssiges Medium, also eine Flüssigkeit, oder ein gasförmiges Medium, also ein Gas. Das Gas ist bevorzugt die Umgebungsluft der Batterie und/oder - bei Verwendung der Batterie in einem Fahrzeug - Luft, insbesondere klimatisierte Luft, aus einem Fahrgastraum des Fahrzeugs. Die Pumpeinrichtung ist insbesondere ein Lüfter.

Die wiederaufladbare Batterie ist insbesondere eine Batterie für ein Hybridfahrzeug und/oder ein Elektrofahrzeug. Die Batterie ist bevorzugt eine Nickel-Metallhydrid-Batterie oder eine Lithium-Ionen-Batterie.

Die Erfindung betrifft weiterhin ein Batteriesystem mit mindestens einer vorgenannten Batterie.

Es ist vorgesehen, dass das Batteriesystem eine Steuerungs-/Regelungseinrichtung zur Steuerung und/oder Regelung des Heizens und/oder Kühlens der Batterie mittels der Wärmetransporteinrichtung aufweist.

Insbesondere ist vorgesehen, dass das System, insbesondere die Steuerungs-/Regelungseinrichtung, eine Vorrichtung zur Batterieladezustandserkennung und/oder Batterietemperaturerkennung aufweist.

Gemäß einer vorteilhaften Ausführungsform der Erfindung ist vorgesehen, dass das Batteriesystem eine den Strom und/oder die Spannung begrenzende Sicherheitsvorrichtung aufweist, wobei die Sicherheitsvorrichtung insbesondere eine den Strom bei Überlast abschaltende Sicherungseinrichtung aufweist.
Die Erfindung wird nachfolgend anhand der zugehörigen Zeichnungen insbesondere den Figuren 5 bis 8 näher erläutert. Es zeigt:
- Figur 1: eine wiederaufladbare Batterie mit prismatischen Batteriezellen,
- Figur 2: eine wiederaufladbare Batterie mit prismatischen Batteriezellen,
- Figur 3: eine wiederaufladbare Batterie mit prismatischen Batteriezellen,
- Figur 4: eine wiederaufladbare Batterie mit prismatischen Batteriezellen,
- Figur 5: eine Spannanordnung aus einer zylindrische Batteriezelle und einer als Spannhülse ausgebildeten Wärmeleiteinrichtung zur Verwendung in einer wiederaufladbaren Batterie,
- Figur 6: eine wiederaufladbare Batterie gemäß einer fünften Ausführungsform der Erfindung mit mehreren der in Figur 4 beschriebenen Spannanordnungen,
- Figur 7: eine wiederaufladbare Batterie gemäß einer sechsten Ausführungsform der Erfindung mit mehreren der in Figur 4 beschriebenen Spannanordnungen und
- Figur 8: eine wiederaufladbare Batterie gemäß einer siebten Ausführungsform der Erfindung mit mehreren der in Figur 4 beschriebenen Spannanordnungen.

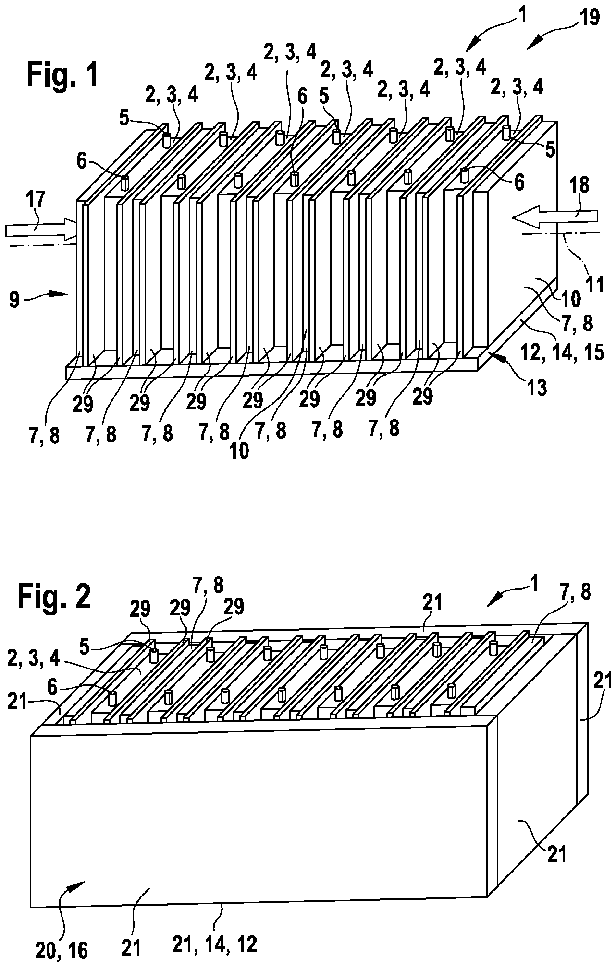

Die Figur 1 zeigt eine wiederaufladbare Batterie 1 mit sieben als prismatische Batterieelemente 2 ausgebildeten Batterieelementen 3. Jedes des Batterieelemente 3 ist eine einzelne Batteriezelle 4 mit jeweils zwei Kontaktelementen 5, 6, einem Plus-Pol 5 und einem Minus-Pol 6. Jedes der prismatischen Batterieelemente 2 ist im Wesentlichen quaderförmig und weist ein Flächenpaar gegenüberliegender Seitenflächen auf, die deutlich größer sind, als die Flächen der anderen Flächenpaare. An einer ersten Fläche einer der anderen Flächenpaare eines jeden prismatischen Batterieelements 2 sind die jeweils zwei Kontakteelemente 5, 6 des Batterieelements 3 angeordnet. Jedes der prismatischen Batterieelemente 2 ist auf ihren beiden Seiten, die den Seitenflächen des ersten Flächenpaares entsprechen, jeweils von zwei als Wärmeleitplatten 7 ausgebildeten Wärmeleiteinrichtungen 8 umgeben. Die Wärmeleiteinrichtungen 8 und die prismatischen Batterieelemente 2 bilden einen Batterieelemente-Stapel 9, wobei zwischen jeweils zwei benachbarten Batterieelementen 2 eine Wärmeleiteinrichtung 8 angeordnet ist. Der Batterieelemente-Stapel 9 besteht aus alternierend angeordneten Wärmeleiteinrichtungen 8 und Batterieelementen 2, wobei die Stapelfolge jeweils mit einer Wärmeleiteinrichtung 8 beginnt und einer Wärmeleiteinrichtung 8 endet. Dabei ist jede der Seitenflächen eines jeden der Batterieelemente 3 - zumindest bereichsweise - in thermischem Kontakt mit einer zugeordneten Seitenfläche einer der als Wärmeleitplatte 7 ausgebildeten Wärmeleiteinrichtungen 8. Dieser thermische Kontakt ist ein direkter Kontakt (nicht gezeigt) oder ein Kontakt über ein elektrisch isolierendes Wärmeleitelement 29, das zwischen den einander gegenüberliegenden Seitenflächen der Batterieelemente 3 und der Wärmeleiteinrichtungen 8 angeordnet ist.

Jede der Wärmeleiteinrichtungen 8 ist an ihrem einen Ende 10 mit einem parallel zur Stapelrichtung 11 verlaufenden Teil 12 einer Wärmetransporteinrichtung 13 verbunden. Durch diese Verbindungen der Wärmeleiteinrichtungen 8 mit der Wärmetransporteinrichtung 13 sind diese beiden Komponenten 8, 13 thermisch miteinander in Kontakt. Bei der in Fig. 1 gezeigten Batterie 1 ist die Wärmetransporteinrichtung 13 als parallel zur Stapelrichtung 11 verlaufende Wärmetransportplatte 14 ausgebildet. Die Wärmetransportplatte 14 ist gleichzeitig ein Batteriesockel 15, der die Batterieelemente 3 der Batterie 1 trägt. Die Wärmetransporteinrichtung 13 weist bevorzugt eine hohe Wärmekapazität auf und dient als Wärmereservoir.

Eine zum Beispiel in Fig. 2 gezeigte Spannvorrichtung 16 übt einen ersten Anpressdruck (Pfeil 17) auf die erste Wärmeleiteinrichtung 8 des Batterieelemente-Stapels 9 und einen in Stapelrichtung 11 entgegengesetzt gerichteten Anpressgegendruck (Pfeil 18) auf die letzte Wärmeleiteinrichtung 8 des Batterieelemente-Stapels 9 und verspannt die im Batterieelemente-Stapel 9 angeordneten Batterieelemente 3 und Wärmeleiteinrichtungen 8 gegeneinander. Die Spannvorrichtung 16 weist zum Ausüben des Anpressdrucks und des Anpressgegendrucks insbesondere einen die Stapelfolge umspannenden Spannrahmen und/oder ein die Stapelfolge umspannendes Spannband und/oder mindestens eine Spannfeder auf.

Es ergibt sich folgende Funktion: Durch das Verspannen der Batterieelemente 3 und der Wärmeleiteinrichtungen 8 ergibt sich eine gute thermische Anbindung der Wärmeleiteinrichtungen 8 an die Batterieelemente 3. Die im Betrieb der Batterie 1 entstehende Abwärme der Batterieelemente 3 wird über die Wärmeleiteinrichtungen 8 und deren Verbindung zu der Wärmetransporteinrichtung 13 übertragen. Somit sind die Wärmeleiteinrichtungen 8 untereinander thermisch gut leitend verbunden. Dadurch wird erreicht, dass alle Batterieelemente 3 der Batterie 1 nahezu die gleiche Temperatur aufweisen. Der Temperaturunterschied zwischen jeder einzelnen der Seitenflächen der Batterieelemente 3 und der Wärmetransporteinrichtung 13 und auch der einzelnen Seitenflächen untereinander beträgt im gesamten Arbeits-Temperaturbereich der Batterie nur wenige Kelvin (K). Damit reduziert sich die Aufgabe eines Thermomanagements einer nicht gezeigten Steuerungs-/Regelungseinrichtung des Batteriesystems für die Batterie 1 auf die Aufgabe, die Temperatur der gesamten Batterie zu regeln.

Die in der Fig. 2 gezeigte wiederaufladbare Batterie 1 weist eine Spannvorrichtung 16 auf, die ihrerseits ein die Batterieelemente 3 einhausendes Batteriegehäuse 20 aufweist, wobei eine Gehäusewand 21 des Batteriegehäuses 20 von der Wärmetransportplatte 14 der Wärmetransporteinrichtung 13 gebildet wird. Somit bildet ein Teil 12 - nämlich die Wärmetransportplatte 14 - der Wärmetransporteinrichtung 8 das die Batterieelemente 3 und die Wärmeleiteinrichtung 8 gegeneinander verspannende Spannvorrichtung 16 mit.

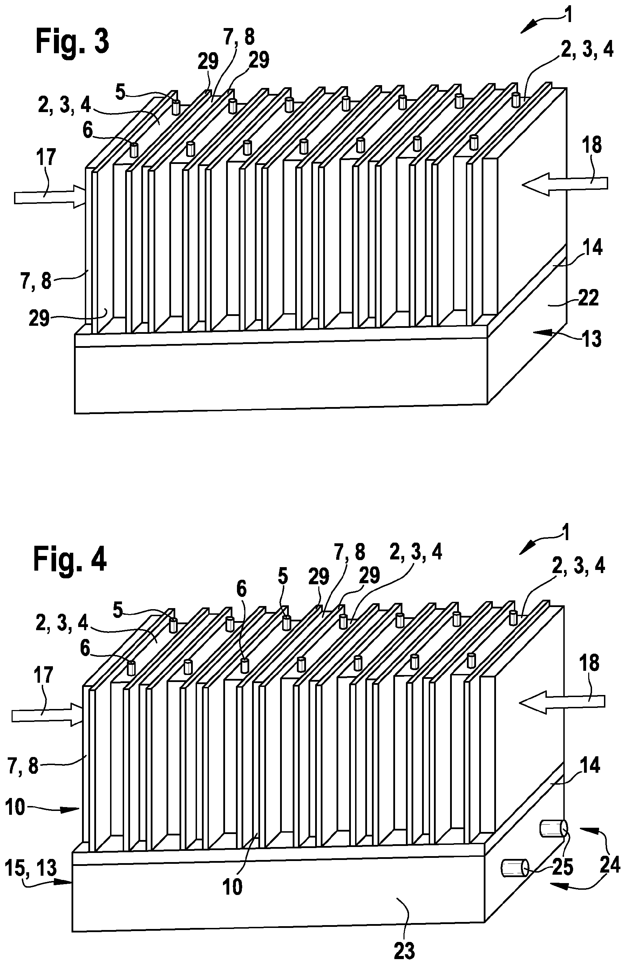

Die in Fig. 3 gezeigte Batterie 1 entspricht im Wesentlichen der Batterie 1 der Fig. 1, wobei die Wärmetransporteinrichtung 13 zusätzlich zur Wärmetransportplatte 14 einen Temperierkörper 22 mit nicht gezeigten Temperierrippen aufweist. Der Temperierkörper 22 ist vorzugsweise ein Kühlkörper mit Kühlrippen.

Die in Fig. 4 gezeigte Batterie 1 entspricht im Wesentlichen der Batterie 1 der Fig. 1, wobei die Wärmetransporteinrichtung 13 zusätzlich zur Wärmetransportplatte 14 ein Wärmereservoir 23 mit integriertem Kanal 24 zur Wärmeübertragung zwischen der Wärmetransporteinrichtung 13 und einem den Kanal 24 durchströmenden Wärmetransportmedium aufweist. Dazu ist der Kanal 24 über Anschlusselemente 25 in einen nicht gezeigten Wärmetransportmedium-Kreislauf einbindbar. Da das Wärmetransportmedium zumeist zum Kühlen der Batterie 1 genutzt wird, wird es auch als Kühlmittel bezeichnet und der entsprechende Kreislauf als Kühlmittelkreislauf. Das Wärmetransportmedium ist vorzugsweise ein wasserbasiertes Kühlmittel.

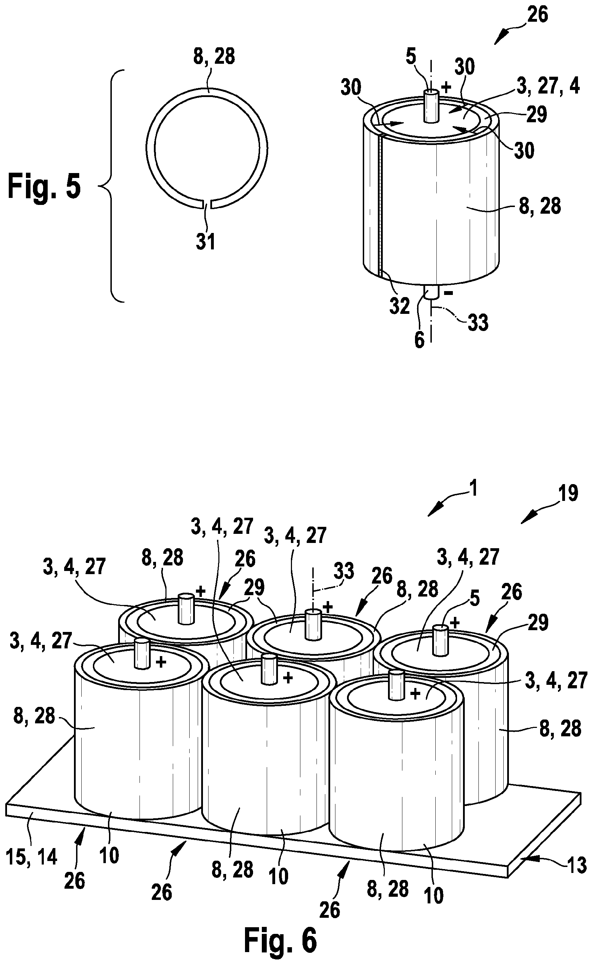

Die Fig. 5 zeigt rechts eine Spannanordnung 26 aus einem als kreiszylindrisches Batterieelement 27 ausgebildeten Batterieelement 3 und einer als Wärmeleithülse 28 ausgebildeten Wärmeleiteinrichtung 8. Das zylindrische Batterieelement 27 ist eine kreiszylindrische Batteriezelle 4. An den einander gegenüberliegenden Flächen des kreiszylindrischen Batterieelements 27 ist jeweils ein Kontaktelement 5, 6 angeordnet. Die Wärmeleithülse 28 umgibt die Mantelfläche des zylindrischen Batterieelements 27 auf deren vollem Umfang und hat die Form eines Hohlzylinders. Zwischen einer Innenumfangsfläche der Wärmeleithülse 28 und der Mantelfläche des zylindrischen Batterieelements 27 ist, ebenfalls vollumfänglich und auf voller Länge des zylindrischen Batterieelements 27, ein elektrisch isolierendes Wärmeleitelement 29 angeordnet. Dieses Wärmeleitelement 29 ist als Wärmeleitpad ausgebildet. Die Wärmeleithülse 28 besteht aus einem Material mit hoher thermischer Leitfähigkeit. Alternativ zur Verwendung des Wärmeleitelements 29 kann eine entsprechende Isolation in dem Batterieelement 27 erfolgen.

Die Wärmeleithülse 28 muss thermisch gut an das zylindrische Batterieelement 27 anbindbar sein. Diese Anbindung erfolgt bevorzugt über einen radial nach innen wirkenden Anpressdruck (Pfeile 30) der als eine Spannhülse ausgebildeten Wärmeleithülse 28 auf das Batterieelement 27. Dazu weist die Wärmeleithülse 28 einen Längsschlitz 31 auf. Bei der Montage der Spannanordnung 26 wird die Wärmeleithülse 28 über das- gegebenenfalls schon mit einem ihre Mantelfläche abdeckenden isolierende Wärmeleitelement 29 versehene - Batterieelement 3 gestülpt. Mit einer nicht gezeigten Umformvorrichtung wird die Hülse 28 durch Druck mechanisch so verformt, dass sie den in etwa gleichmäßig radial nach innen weisenden Anpressdruck (Pfeile 30) auf die Mantelfläche des Batterieelements 3 ausübt. Anschließend wird die Hülse 28 unter Aufrechterhaltung des Drucks vorzugsweise durch eine Verschweißung an dem Längsschlitz 31 mechanisch fixiert. Dabei entsteht eine in Fig. 5 rechts gezeigte und als Schweißnaht ausgebildete Längsnaht 32. Die als Wärmeleithülse 28 ausgebildete Wärmeleiteinrichtung 8 und das als zylindrisches Batterieelement 27 ausgebildete Batterieelement bilden die Spannanordnung 26.

Die Fig. 6 zeigt eine wiederaufladbare Batterie 1 mit sechs als zylindrische Batterieelemente 27 ausgebildeten Batterieelementen 3, die mit jeweils zugeordneten Wärmeleithülsen 28 sechs Spannanordnungen 26 bilden. Jede der Wärmeleiteinrichtungen 8 ist an ihrem einen Ende 10 mit einem senkrecht zur Längsachse 33 der zylindrischen Batterieelemente 27 verlaufenden Teil 12 der Wärmetransporteinrichtung 13 verbunden. Durch diese Verbindungen der Wärmeleiteinrichtungen 8 mit der Wärmetransporteinrichtung 13 sind diese beiden Komponenten 8, 13 auch thermisch miteinander in Kontakt. Bei der in Fig. 6 gezeigten Batterie 1 ist die Wärmetransporteinrichtung 13 als senkrecht zur Längsachse 33 der zylindrischen Batterieelementen 27 verlaufende Wärmetransportplatte 14 ausgebildet. Die Wärmetransportplatte 14 ist gleichzeitig ein Batteriesockel 15, der die Batterieelemente 3 der Batterie 1 trägt. Die Wärmetransporteinrichtung 13 weist bevorzugt eine hohe Wärmekapazität auf und dient als Wärmereservoir.

Es ergibt sich folgende Funktion: Durch das Verspannen der Batterieelemente 3 und der Wärmeleiteinrichtungen 8 ergibt sich eine gute thermische Anbindung der Wärmeleiteinrichtungen 8 an die Batterieelemente 3. Die im Betrieb der Batterie 1 entstehende Abwärme der Batterieelemente 3 wird über die Wärmeleiteinrichtungen 8 und deren Verbindung zu der Wärmetransporteinrichtung 13 übertragen. Somit sind die Wärmeleiteinrichtungen 8 untereinander thermisch gut leitend verbunden. Dadurch wird erreicht, dass alle Batterieelemente 3 der Batterie 1 nahezu die gleiche Temperatur aufweisen. Der Temperaturunterschied zwischen jeder Umfangsfläche der zylindrischen Batterieelemente 27 und der Wärmetransporteinrichtung 13 und auch der einzelnen Umfangsflächen untereinander beträgt im gesamten Arbeits-Temperaturbereich der Batterie 1 nur wenige Kelvin (K). Damit reduziert sich die Aufgabe eines Thermomanagements für die Batterie 1 auf die Aufgabe, die Temperatur der gesamten Batterie 1 zu regeln.

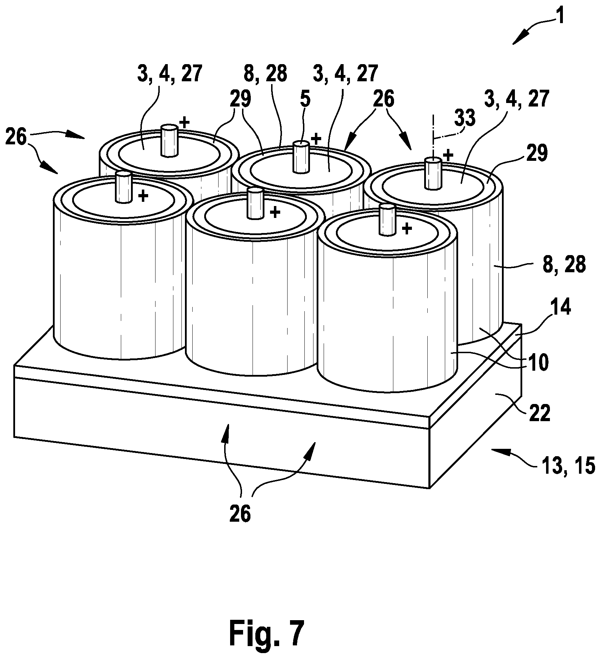

Die in Fig. 7 gezeigte Batterie 1 entspricht im Wesentlichen der Batterie 1 der Fig. 6, wobei die Wärmetransporteinrichtung 13 zusätzlich zur Wärmetransportplatte 14 einen Temperierkörper 22 mit nicht gezeigten Temperierrippen aufweist. Der Temperierkörper 22 ist vorzugsweise ein Kühlkörper mit Kühlrippen.

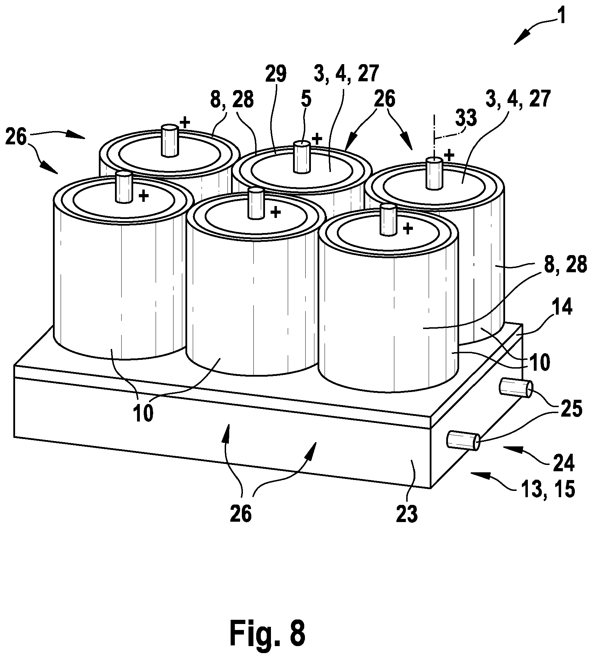

Die in Fig. 8 gezeigte Batterie 1 entspricht im Wesentlichen der Batterie 1 der Fig. 6, wobei die Wärmetransporteinrichtung 13 zusätzlich zur Wärmetransportplatte 14 ein Wärmereservoir 23 mit integriertem Kanal 24 zur Wärmeübertragung zwischen der Wärmetransporteinrichtung 13 und einem den Kanal 24 durchströmenden Wärmetransportmedium aufweist. Dazu ist der Kanal 24 über die Anschlusselemente 25 in einen nicht gezeigten Wärmetransportmedium-Kreislauf einbindbar. Da das Wärmetransportmedium zumeist zum Kühlen der Batterie 1 genutzt wird, wird es auch als Kühlmittel bezeichnet und der entsprechende Kreislauf als Kühlmittelkreislauf. Das Wärmetransportmedium ist vorzugsweise ein wasserbasiertes Kühlmittel.

## Patentansprüche

1. Wiederaufladbare Batterie mit mindestens einem Batterieelement (3), einer Wärmetransporteinrichtung (13) ausgebildet zum Heizen und/oder Kühlen der Batterie (1) und mindestens einer Wärmeleiteinrichtung (8),
wobei das mindestens eine Batterieelement (3) und die mindestens eine Wärmeleiteinrichtung (8) wärmeleitend miteinander verbunden sind und wobei die mindestens eine Wärmeleiteinrichtung (8) und die Wärmetransporteinrichtung (13) wärmeleitend miteinander verbunden sind, wobei eine von dem Batterieelement (3) und der Wärmeleiteinrichtung (8) gebildete Spannanordnung (26) das mindestens eine Batterieelement (3) und die mindestens eine Wärmeleiteinrichtung (8) gegeneinander verspannt wobei - zumindest in einem Bereich - zwischen mindestens einem Batterieelement (3) und mindestens einer mit diesem Batterieelement (3) verspannten Wärmeleiteinrichtung (8) und/oder zwischen zwei Wärmeleiteinrichtungen (8) ein elektrisch isolierendes Wärmeleitelement (29) angeordnet ist,
wobei das Batterieelement (3) als kreiszylindrisches Batterieelement (27) ausgebildet ist, **dadurch gekennzeichnet, dass** die Wärmeleiteinrichtung (8) als eine eine Mantelfläche des Batterieelements (3) - zumindest abschnittsweise - vollumfänglich umgebende und einen Längsschlitz (31) aufweisende Wärmeleithülse (28) ausgebildet ist.

2. Batterie nach Anspruch 1,
**dadurch gekennzeichnet, dass**
das Batterieelement (3) eine Batteriezelle (4) ist.

3. Batterie nach einem der vorhergehenden Ansprüche,
**dadurch gekennzeichnet, dass**
die Wärmetransporteinrichtung (13) einen die Batterieelemente (3) tragenden Batteriesockel (15) bildet.

4. Batterie nach einem der vorhergehenden Ansprüchen,
**dadurch gekennzeichnet, dass**
die Wärmetransporteinrichtung (13) einen Temperierkörper (22) aufweist.

5. Batterie nach einem der vorhergehenden Ansprüchen,
**dadurch gekennzeichnet, dass**
die Batterie (1) eine Batterie (1) für ein Hybridfahrzeug und/oder ein Elektrofahrzeug ist.

6. Batterie nach einem der vorhergehenden Ansprüchen,
**dadurch gekennzeichnet, dass**
die Batterie (1) eine Nickel-Metallhydrid-Batterie oder eine Lithium-lonen-Batterie ist.

7. Batteriesystem (19) mit mindestens einer Batterie (1) nach einem der vorhergehenden Ansprüchen,
**gekennzeichnet durch**
mindestens eine Steuerungs-/Regelungseinrichtung zur Steuerung und/oder Regelung des Heizens und/oder Kühlens der Batterie (1) und/oder zur Batterieladezustandserkennung und/oder Batterietemperaturerkennung.

## Claims

1. Rechargeable battery having at least one battery element (3), one heat-transporting device (13) designed for heating and/or cooling the battery (1) and at least one heat-conducting device (8), wherein the at least one battery element (3) and the at least one heat-conducting device (8) are connected to one another in a heat-conducting manner, and wherein the at least one heat-conducting device (8) and the heat-transporting device (13) are connected to one another in a heat-conducting manner, wherein a clamping arrangement (26) which is formed by the battery element (3) and the heat-conducting device (8) braces the at least one battery element (3) and the at least one heat-conducting device (8) against one another, wherein - at least in one region - an electrically insulating heat-conducting element (29) is arranged between at least one battery element (3) and at least one heat-conducting device (8), which is braced to this battery element (3), and/or between two heat-conducting devices (8), wherein the battery element (3) is designed as a circular-cylindrical battery element (27), **characterized in that** the heat-conducting device (8) is designed as a heat-conducting sleeve (28) which - at least in sections - completely surrounds a lateral surface of the battery element (3) and has a longitudinal slot (31).

2. Battery according to Claim 1, **characterized in that** the battery element (3) is a battery cell (4).

3. Battery according to either of the preceding claims, **characterized in that** the heat-transporting device (13) forms a battery base (15) which carries the battery elements (3).

4. Battery according to one of the preceding claims, **characterized in that** the heat-transporting device (13) has a temperature-control body (22).

5. Battery according to one of the preceding claims, **characterized in that** the battery (1) is a battery (1) for a hybrid vehicle and/or an electric vehicle.

6. Battery according to one of the preceding claims, **characterized in that** the battery (1) is a nickel metal hydride battery or a lithium-ion battery.

7. Battery system (19) having at least one battery (1) according to one of the preceding claims, **characterized by** an open-loop control/closed-loop control device for open-loop control and/or closed-loop control of the heating and/or cooling of the battery (1) and/or for identifying the state of charge of a battery and/or for identifying the temperature of a battery.

## Revendications

1. Batterie rechargeable, comprenant au moins un élément de batterie (3), un dispositif de transport de chaleur (13) conçu pour chauffer et/ou refroidir la batterie (1) et au moins un dispositif de conduction de chaleur (8),
l'au moins un élément de batterie (3) et l'au moins un dispositif de conduction de chaleur (8) étant reliés l'un à l'autre avec conduction de chaleur et l'au moins un dispositif de conduction de chaleur (8) et le dispositif de transport de chaleur (13) étant reliés l'un à l'autre avec conduction de chaleur,
un arrangement de serrage (26) formé par l'élément de batterie (3) et le dispositif de conduction de chaleur (8) serrant l'au moins un élément de batterie (3) et l'au moins un dispositif de conduction de chaleur (8) l'un contre l'autre,
un élément de conduction de chaleur électriquement isolant (29) étant disposé - au moins dans une zone - entre au moins un élément de batterie (3) et au moins un dispositif de conduction de chaleur (8) serré contre cet élément de batterie (3) et/ou entre deux dispositifs de conduction de chaleur (8),
l'élément de batterie (3) étant réalisé sous la forme d'un élément de batterie cylindrique circulaire (27), **caractérisée en ce que**
le dispositif de conduction de chaleur (8) est réalisé sous la forme d'une gaine de conduction de chaleur (28) qui entoure intégralement - au moins dans certaines portions - une enveloppe de l'élément de batterie (3) et qui possède une fente longitudinale (31).

2. Batterie selon la revendication 1, **caractérisée en ce que** l'élément de batterie (3) est une cellule de batterie (4).

3. Batterie selon l'une des revendications précédentes, **caractérisée en ce que** le dispositif de transport de chaleur (13) forme un socle de batterie (15) portant l'élément de batterie (3).

4. Batterie selon l'une des revendications précédentes, **caractérisée en ce que** le dispositif de transport de chaleur (13) possède un corps d'équilibrage de température (22).

5. Batterie selon l'une des revendications précédentes, **caractérisée en ce que** la batterie (1) est une batterie (1) pour un véhicule hybride et/ou un véhicule électrique.

6. Batterie selon l'une des revendications précédentes, **caractérisée en ce que** la batterie (1) est une batterie au nickel-hydrure métallique ou une batterie aux ions de lithium.

7. Système de batterie (19) comprenant au moins une batterie (1) selon l'une des revendications précédentes, **caractérisé par** au moins un dispositif de commande/régulation destiné à commander et/ou à réguler le chauffage et/ou le refroidissement de la batterie (1) et/ou destiné à reconnaître l'état de charge de la batterie et/ou à reconnaître la température de la batterie.
